# EUROPÄISCHE PATENTSCHRIFT

(11) **EP 2 847 966 B1**
(45) Veröffentlichungstag und Bekanntmachung des Hinweises auf die Patenterteilung: **14.10.2020**
(21) Anmeldenummer: 13721340.1
(22) Anmeldetag: 07.05.2013
(51) Int. Cl.: H04L 12/925, H04L 29/08, H04L 29/06, H04L 12/927, H04L 12/913

(54) **VERFAHREN ZUR ÜBERTRAGUNG VON DATEN IN EINEM PAKETORIENTIERTEN KOMMUNIKATIONSNETZWERK, ENTSPRECHENDES SYSTEM UND ENTSPRECHENDES COMPUTERPROGRAMMPRODUKT**
METHOD FOR TRANSMISSION OF DATA IN A PACKET ORIENTED COMMUNICATIONS NETWORK, CORRESPONDING SYSTEM AND CORRESPONDING COMPUTER PROGRAM PRODUCT
PROCÉDÉ DE TRANSMISSION DE DONNÉES DANS UN RÉSEAU DE COMMUNICATION ORIENTÉ PAQUETS, SYSTÈME CORRESPONDANT ET PRODUIT PROGRAMME D'ORDINATEUR CORRESPONDANT

(30) Priorität: 11.05.2012 DE 102012207958
(43) Veröffentlichungstag der Anmeldung: 18.03.2015
(73) Patentinhaber: Continental Automotive GmbH, 30165 Hannover (DE)
(72) Erfinder: NÖBAUER, Josef, 92445 Neukirchen-Balbini (DE); ZINNER, Helge, 98646 Straufhain (DE)
(86) Internationale Anmeldenummer: PCT/EP2013/059436
(87) Internationale Veröffentlichungsnummer: WO 2013/167562

(56) Entgegenhaltungen:
- EP-A2- 1 193 920
- US-B2- 8 060 615

## Beschreibung

Diese Anmeldung betrifft ein Verfahren, ein System, und ein Computerprogrammprodukt, wobei in einem Netzwerk Dienstgütedifferenzierung betrachtet wird. EP 1193920 wird ein Verfahren zum Auslösen einer Streaming -Medien-Übertragung zwischen einer Server-Vorrichtung und einer Client-Vorrichtung beschrieben, wobei das Verfahren umfasst: selektives Übertragen eines ersten Teils eines Stroms von Daten, Einrichten eines Pfads garantierter Dienstgüte (quality of Service) von der Server-Vorrichtung, selektives Übertragen eines folgenden Teils des Stroms von Daten, und anfängliches Streaming der Daten mit einer höheren Rate als einer Ist-Streaming-Rate, bis ein Start-Puffer der Client-Vorrichtung voll ist.

In US 8060615 werden Registrierungen durch Geräte an Brücken einer Netzwerkdomäne ausgegeben. Eine Registrierung betrifft einen Datenstrom und schließt einen Status ein. Im Fall eines Quellgeräts wird eine Bandbreitenanforderung auch in der Registrierung angegeben, und gibt der Status an, ob das Gerät ein Anbieter ist oder fehlgeschlagen ist. Im Fall eines Senkgeräts ist der Status Nachfrager, Nachfragerfehlgeschlagen, bereit oder bereit-fehlgeschlagen. Wenn eine Brücke Registrierungen von einem Quellgerät und von einem Senkgerät für denselben Datenstrom empfangen hat und sich auf einem Pfad des Datenstroms zwischen dem Quellgerät und dem Senkgerät befindet, versucht die Brücke, Ressourcen für den Datenstrom zuzuweisen, wenn sich die Brücke auf einem Pfad des Streams zwischen dem Sprechergerät und dem Zuhörergerät befindet. Die Brücke kann dann über jeweilige Zustände der Registrierungen benachrichtigen, ob Ressourcen zugewiesen wurden.

Zuerst werden Vergleichsbeispiele von dem Stand der Technik beschrieben, in denen einige Probleme offensichtlich sind. In einem Kraftfahrzeug spielt neben einer zeitlich garantierten Übertragungszeit für Datenpakete im Rahmen vieler Anwendungen auch die Aufstartzeit des Netzwerks eine wichtige Rolle. Als Aufstartzeit wird die Zeit bezeichnet, die benötigt wird, bis es möglich ist, über dieses Netzwerk nach einem Starten des Netzwerks Daten zu versenden. Dabei wird von einem Zustand ausgegangen, bei dem Netzwerk vorher inaktiv war. Alle erforderlichen Konfigurationen, Synchronisationen und weitere Startmechanismen müssen dann abgeschlossen sein. Zum Aufstart eines Netzwerks gehören also neben dem Start des jeweiligen Steuergeräts auch der Start des für das Netzwerk zuständigen Netzwerkcontrollers und der Aufbau bzw. die Initialisierung einer Kommunikation mit den weiteren Netzwerkteilnehmern in dem paketorientierten Kommunikationsnetzwerk (kurz auch als Netzwerk bezeichnet). Ein wichtiger kritischer Punkt ist dabei die zeitliche Synchronisation der Netzwerkteilnehmer, welche erst eine Kommunikation eines zeitgesteuerten Netzwerks, wie MOST, FlexRay und beispielsweise Ethernet nach dem AVB-Standard, ermöglicht.

Klassische Kraftfahrzeug-Kommunikationsnetzwerke sind beispielsweise MOST und FlexRay. Diese ermöglichen eine Aufstartzeit von ca. 100 ms. Bei FlexRay bedeutet dies, dass nach 100 ms bereits applikative Nachrichten verschickt werden können. Bei MOST folgt dann typischerweise noch eine Ermittlung der Netzkonfiguration, so dass die applikativen Nachrichten erst typischerweise nach 500 ms verschickt werden können. Erst dann ist der Versand von Daten, beispielsweise eines synchronisierten Datenstroms im Rahmen eines Datenstreams, möglich.

Bei einer üblichen Nutzung des Kommunikationsnetzwerks in einem Kraftfahrzeug kann mit dem Aufstart des Netzwerks meist schon begonnen werden, wenn das abgestellte Fahrzeug über die Fernbedienung (Keyless Entry) aufgeschlossen wird, da davon auszugehen ist, dass der Fahrer nach dem Einsteigen des Fahrzeugs entweder losfährt oder sonstwie auf die Netzwerkkommunikation benötigende Funktionen des Kraftfahrzeugs zugreift. Aufgrund der Einstiegszeit ist in diesem Fall auch eine verlängerte Aufstartzeit aufgrund der genannten Reservierungsanfragen in dem Netzwerk kein größeres Problem.

Als problematisch bei den genannten Vergleichsbeispielen erweisen sich jedoch Fälle, in denen der Fahrer eines Fahrzeugs über längere Zeit völlig inaktiv in einem abgeschalteten Fahrzeug sitzt, beispielsweise weil er schläft, und dann plötzlich das Fahrzeug startet und losfährt. Vor dem Starten des Fahrzeugs waren alle Steuergeräte aufgrund der längeren Inaktivitätszeit nicht mehr aktiv. Nach dem Start des Autos müssen entsprechend den üblichen Anforderungen beispielsweise der Warnton der Einparkhilfe in weniger als zwei Sekunden hörbar und/oder das Videobild der Rückfahrkamera in weniger als zwei Sekunden sichtbar sein.

Bei einer gemäss einem weiteren aus dem Stand der Technik üblichen Übertragung von Audio- und/oder Videosignalen sowie Kontrolldaten, ist eine synchronisierte Übertragung in dem Datennetz wichtig, die beispielsweise mit dem gerade für die Audio- und Videodatenübertragung vorgesehene Übertragung über das Ethernet nach dem AVB-Standard möglich ist. Aufgrund der weitreichenden Standardisierung und flexiblen Gestaltung des Ethernet-AVB-Standards erweckt dieser auch zunehmend Interesse zum Einsatz in Kraftfahrzeugen, in denen es nach einer Standardisierung im Jahre 2011 derzeit aber noch nicht in nennenswertem Umfang eingesetzt wird. Ein wesentlicher Vorteil des Ethernet-AVB-Standards ist die Zusicherung von Dienstgüte (QoS - Quality of Service) für die zu übertragenden Daten, wenn diese als Streaming-Daten übertragen werden sollen. Durch das Stream-Reservierungsprotokoll MSRP (Multiple Stream Reservation Protocol) des Standards IEEE 802.1Qat müssen daher vorab Ressourcen des Kommunikationsnetzwerks und insbesondere der die einzelnen Datenpakete von dem Sender zu dem Empfänger weiterleitenden Switches reserviert werden. Durch eine derartige Reservierung kann zugesichert werden, dass die mit dem IEEE 1722- oder IEEE 1733-Transportprotokoll übertragenen Daten mit einer garantierten maximalen Verzögerung bei dem Empfänger ankommen.

Diese Garantie ist Teil des Quality of Service. Die vorgenannten Transportprotokolle sichern also eine maximale Verzögerung der Datenpakete beim Transport der Daten bzw. Streamingdaten über das Kommunikationsnetzwerk zu. Ohne Verwendung dieser oder gleichwertiger Protokolle kann die Ankunftszeit nicht bestimmt werden. Diese Ankunftszeit ist beispielsweise für Audio- und Videodaten besonders wichtig. Bei Hintergrunddatenverkehr bzw. unwichtigeren, nicht zeitkritischen oder nicht in einer zeitlichen Relation zu mittels anderer Datenpakete übertragenen Daten stehende Daten spielt dies keine nennenswerte Rolle, so dass für diese Daten keine Reservierung notwendig ist. Entsprechend werden für diese Daten auch keine Reservierungsanfragen gesendet.

Sofern dagegen Daten gesendet werden, die in einer garantierten Übertragungszeit übertragen werden sollen, um bestimmte Anwendungen erst zu ermöglichen oder sicherzustellen, lässt sich der gemäß dem Ethernet-AVB-Standard ablaufende Vorgang weder umgehen noch nennenswert beschleunigen. Sofern eine Reservierungsanfrage sogar fehlschlägt, können im Rahmen des Ethernet-AVB-Standards zunächst gar keine Daten übertragen werden, bis die Übertragung mit der gewünschten Dienstgüte reserviert ist, und das ist eine besondere Aufgabe aus diesem Stand der Technik.

Mit dieser im Vergleich zu anderen Kommunikationsnetzwerken vergleichsweise aufwendigen Dienstgüte-Garantie einer Datenübertragung wird dem Umstand Rechnung getragen, dass das Ethernet als solches ein sehr flexibles und daher in der Anwendung für eine Vielzahl von Kommunikationsarten gut geeignetes Netzwerk ist. Im Gegensatz zu den gängigen Netzwerken in Kraftfahrzeugen, wie beispielsweise FlexRay oder MOST, ist der Aufstart des Netzwerks, d. h. die Zeit bis zu einer möglichen Datenübertragung von Daten mit einer garantierten Dienstgüte (QOS) aber wesentlich langsamer. Außerdem kann die durch die Reservierungsanfrage dynamisch ausgestaltete Anfrage nach Ressourcen in dem Kommunikationsnetzwerk entlang einer gewünschten Kommunikationsverbindung auch zu einer Ablehnung führen, wenn die gewünschte Dienstgüte nicht erreichbar ist. Dies ist gleichbedeutend damit, dass eine Datenübertragung nicht möglich ist.

Aus diesem Grunde werden in Netzwerken eines Kraftfahrzeugs für Datenübertagungen, die eine gewisse Güte benötigen, die Kommunikationsnetzwerke MOST und FlexRay verwendet, die insofern aufgrund ihrer starren Netzwerktopologie, die in dem Kraftfahrzeug fest vorgegeben ist, mit wesentlich schnelleren Reaktionszeiten für die Garantie einer Dienstgüte bei der Übertragung zeitkritischer, beispielsweise echtzeitkritischer, Daten realisierbar sind. Der Ethernet-AVB-Standard, der aufgrund seiner Flexibilität auch für einen Einsatz im Kraftfahrzeug wünschenswert ist, steht in Konkurrenz zu diesen beiden üblicherweise in Kraftfahrzeugen eingesetzten Kommunikationsnetzwerken und sollte bei einem Einsatz im Kraftfahrzeug, beispielsweise dem Ersatz der Kommunikationsnetzwerke MOST und/oder FlexRay, auch mindestens deren Güteanforderungen hinsichtlich der Latenzzeiten und des Nachrichtenjitters für den Datentransport unterstützen.

Der Datentransport beispielsweise eines FlexRay-Netzwerkes ist in dessen statischen Teil vollständig geplant, bevor das Netzwerk gestartet wird, d. h., der Datentransport wird bereits zur Designzeit festgelegt. Dadurch ist die Kommunikation in dem FlexRay-Netzwerk jederzeit vorhersehbar. Dies wird vor der Produktion eines Automobils, beispielsweise dessen Linie oder speziellen Modells, einmalig festgelegt und hat Bestand über die Lebensdauer des Fahrzeugs, zumindest aber bis zu einem Software-Update aller Netzwerkteilnehmer in dem Kommunikationsnetz des Fahrzeugs.

Aufgabe der vorliegenden Erfindung ist es, einen schnelleren Start des Datentransportes für insbesondere echtzeitkritische Daten und/oder für bei dem Aufstart des Kommunikationsnetzwerks übertragene Daten in einem Kommunikationsnetzwerk zu erreichen, das nach dem Ethernet-AVB-Standard oder einem daran angelehnten Standard funktioniert und bei dem zur Garantie einer bestimmten Dienstgüte insbesondere Reservierungsanfragen gesendet werden müssen.

Diese Aufgabe wird bei einem Verfahren gemäss Anspruch 1 gelöst. Das Verfahren ist ein Verfahren zur Übertragung eines Datenstroms mit ersten Datenpaketen und zweiten Datenpaketen sowie einer Reservierungsanfrage in einem paketorientierten Kommunikationsnetzwerk entlang einer Kommunikationsverbindung von einem Sender durch mindestens einen Switch an einen Empfänger. Das Verfahren umfasst: (a) die Übertragung der ersten Datenpakete ohne eine garantierte Übertragungszeit der ersten Datenpakete, und (b) die Übertragung der zweiten Datenpakete mit einer garantierten maximalen Übertragungszeit der zweiten Datenpakete.Das paketorientierte Kommunikationsnetzwerk ist dazu angepasst, (i) bei der Übertragung der zweiten Datenpakete mit garantierter Übertragungszeit von dem Sender an den Empfänger
- für diese Datenübertragung mittels einer durch den Sender ausgesandten Reservierungsanfrage eine gewisse Dienstgüte zu reservieren und
- die Datenübertragung zweiten Datenpakete mit garantierter Übertragungszeit erst nach Erhalt einer Bestätigung der ausgesandten Reservierungsanfrage durch den Sender zu starten.

Das pakentorientierte Kommunikationsnetzwerk ist auch angepasst, (ii) ausgewählte Daten des Datenstroms unmittelbar ohne vorheriges Aussenden der Reservierungsantrage und Abwarten deren Bestätigung als erste Datenpakete ohne garantierte Übertragungszeit durch den Sender auszusenden, obwohl es sich bei den ausgewählten Daten um Daten handelt, die in einer garantierten Übertragungszeit übertragen werden sollen, und die Reservierungsanfrage erst nach dem Start des Aussendens der ersten Datenpakete nachzusenden. Nach Erhalt der Bestätigung auf die nachgesendete Reservierungsanfrage noch nicht gesendete Datenpakete des Datenstroms werden durch den Sender als Datenpakete mit einer garantierten Übertragungszeit umdeklariert. Die abhängigen Ansprüche definieren entsprechende Ausführungsbeispiele. Dabei ist insbesondere vorgesehen, dass ausgewählte Daten, insbesondere echtzeitkritische Daten und/oder bei dem Aufstart des Kommunikationsnetzwerks gesendete Daten, die insbesondere für eine schnelle Kommunikationsfähigkeit des Kommunikationsnetzwerks nach dem Start notwendig sind, unmittelbar, d. h. ohne Aussenden einer Reservierungsanfrage und Abwarten einer Bestätigung der Reservierungsanfrage, als Datenstrom von Datenpaketen ohne garantierte Übertragungszeit ausgesendet werden.

Bei dem paketorientierten Kommunikationsnetzwerk kann es sich insbesondere um ein Netzwerk nach dem Ethernet-AVB-Standard handeln.

Die Reservierungsanfrage umfasst als Parameter der angeforderten Dienstgüte vorzugsweise die Datenrate des Datenstroms, die der Sender für die Übersendung der Daten vorsehen möchte, und die Latenz, d. h. die maximale Übertragungszeit, beispielsweise in Form einer Dienstgüte-Klasse, welche u. a. die maximale Übertragungszeit vorgibt.

Die Erfindung schlägt also vor, Datenströme ausgewählter Daten sofort bei Vorliegen dieser Daten auszusenden, ohne auf eine Bestätigung der Reservierungsanfrage (Reservierungsantwort) zu warten, die mehrere 100 ms bis hin zu einigen Sekunden dauern kann. Diese Wartezeit wird also erfindungsgemäß eingespart, wobei aufgrund dieser Vorgabe die an sich gewünschte Dienstgüte im Rahmen des Transportprotokolls nicht garantiert wird. Dies wird dann für den Datenstrom aber durch das Nachsenden einer Reservierungsanfrage nachgeholt, so dass die garantierte Übertragungszeit zumindest für eine Vielzahl von Datenpaketen des Datenstroms doch erreicht werden kann.

Die ersten Datenpakete dieses Datenstroms werden ohne die garantierte Übertragungszeit ausgesendet. Deshalb ist die Gesamtübertragung in der Praxis häufig schneller, als wenn zunächst eine Reservierungsanfrage ausgesendet würde und eine Bestätigung hierauf abgewartet würde. Daher eignet sich das Verfahren insbesondere für besonders zeitkritische Daten, die möglichst in Echtzeit übertragen werden sollen. Mit dieser Lösung wird der Ethernet-AVB- oder ein vergleichbar arbeitender Standard der Funktionsweise der in Kraftfahrzeugen häufig eingesetzten Netzwerke MOST und FlexRay ähnlicher. Erfindungsgemäß kann das Versenden von echtzeitkritischen Daten also deutlich beschleunigt werden, so dass spezielle Anforderungen aus dem Automobilbereich durch diese erfindungsgemäße Variante der Verwendung eines Ethernet-AVB-Transportprotokolls nachträglich erfüllt werden, auch wenn die fehlende Dienstgütegarantie zunächst vermuten ließe, dass das Initiieren eines Datenstroms ohne Vorliegen der Dienstgütegarantie nicht zu dem gewünschten Ergebnis führt.

An dieser Stelle sei angemerkt, dass das vorgeschlagene Verfahren, auch wenn es speziell für den Einsatz in Kommunikationsnetzwerken in Kraftfahrzeugen besonders geeignet ist, nicht auf diesen Anwendungsfall beschränkt ist, sondern allgemein Anwendung finden kann, wenn Ethernet-AVB-Transportprotokolle gemäß den vorgenannten Standards eingesetzt werden sollen und besonders zeitkritische Daten zu übertragen sind. Ein typischer Anwendungsfall kann hier auch die Automatisierungstechnik in Produktionsanlagen sein.

In einem Ausführungsbeispiel wird eine spätere Nachreservierung verwendet, wenn ein vorhandener Datenstrom eine veränderte Dienstgüte bekommen soll, ohne dass der Datenstrom dabei unterbrochen wird.

Erfindungsgemäß ist vorgesehen, dass der Datenstrom der ausgewählten Daten nach Erhalt einer Bestätigung auf die nachgesendete Reservierungsanfrage als Datenstrom mit einer garantierten Übertragungszeit der Datenpakete umdeklariert wird. Durch das Umdeklarieren sozusagen "on the flight" wird die garantierte Übertragungszeit für Datenpakete des Datenstroms ab diesem Zeitpunkt dann garantiert und also auch verlässlich eingehalten. Zu diesem Zeitpunkt, bei dem entsprechend dem normalen Ethernet-AVB-Standard erst mit der Übertragung der Daten begonnen werden könnte, sind jedoch bereits eine Vielzahl der Daten als Datenpakete des Datenstroms ausgesendet, die möglicherweise jedes für sich genommen die garantierte Dienstgüte nicht einhält (obwohl dies natürlich genauso möglich ist), jedoch in typischen Anwendungen gerade in überschaubaren Kommunikationsnetzwerken wie denen eines Kraftfahrzeugs einer begrenzten Anzahl von Teilnehmern üblicherweise insgesamt schneller ankommen im Vergleich zu einem Fall, in dem die Bestätigung der Reservierungsanfrage erst abgewartet wird. Einfacher Weise kann das Umdeklarieren erfindungsgemäß beispielsweise im Header der Datenpakete des Datenstroms erfolgen, wobei noch nicht ausgesendete Datenpakete des Datenstroms vorzugsweise schon im Sender umdeklariert werden, so dass nach Erhalt der Bestätigung des Datenpaketes durch den Sender nur noch ein Datenstrom von Datenpaketen mit garantierter Übertragungszeit übertragen werden.

Gemäß der Erfindung werden die Datenpakete des Datenstroms entlang der Kommunikationsverbindung (Kommunikationsroute bzw. Kommunikationsweg) in Switches umdeklariert, in denen die Datenpakete empfangen und zum Empfänger hin entlang der Kommunikationsverbindung wieder ausgesendet werden. Da ein Switch üblicher Weise Teile des Headers eines Datenpaketes des Datenstroms ohnehin auswerten muss, hat der Switch beispielsweise mit seiner Steuereinrichtung Zugriff auf den Header und kann in dem Header eine Erkennung des Datenpakets des Datenstroms entsprechend umstellen. Wenn der Switch durch den Empfänger die Bestätigung der Reservierungsanfrage erhält, ist in dem Kommunikationsnetzwerk bekannt, dass die Ressourcen für eine Übertragung mit der entsprechenden Dienstgüte in jedem Fall vorhanden sind.

Einem Ausführungsbeispiel nach enthalten die Datenpakete eine Kennung des Datenstroms, die auch in der nachgesandten Reservierungsanfrage und der Bestätigung der Reservierungsanfrage enthalten ist, so dass jeder Switch ein Datenpaket des Datenstroms als zu dieser Reservierungsanfrage bzw. Bestätigung zugehörig erkennen kann.

Um zum Beispiel in einem entsprechenden Standard den Datenstrom auch ohne Empfang einer Bestätigungsnachricht aussenden zu können, ist vorgesehen, der Datenstrom der ausgewählten Daten zunächst als Daten ohne garantierte Übertragungszeit der Datenpakete deklariert wird. Als Ausführungsbeispiel kann die Erfindung in einem standardisierten Netzwerk, insbesondere dem Ethernet-AVB-Netzwerk umgesetzt werden, in dem die Datenübertragung von Daten mit einer garantierten Übertragungszeit erst nach Erhalt einer Bestätigung auf eine Reservierungsanfrage gestartet werden kann.

Hierdurch ist eine Umsetzung der Erfindung also ohne Eingriff oder Verletzung des Standards möglich.

In einer besonders einfachen Ausführungsform dieser erfindungsgemäßen Idee kann im Rahmen des Ethernet-AVB-Standards ein anderes Transportprotokoll verwendet werden, das keine Übertragungszeit der Datenpakete garantiert, im Falle des Ethernet-AVB-Standards also beispielsweise keine Transportprotokolle nach den Normen IEEE 1722 oder IEEE 1733 bzw. vergleichbare Transportprotokolle.

Dies hat allerdings zur Folge, dass der Datenstrom der ausgewählten Daten zunächst als reiner Hintergrunddatenverkehr behandelt wird. Daher kann gemäß einer Weiterentwicklung der Erfindung vorteilhafter Weise auch vorgesehen werden, dass für das Übertragen des Datenstroms der ausgewählten Daten ein Transportprotokoll verwendet wird, welches auch eine Übertragung von Daten mit einer garantierten Übertragungszeit der Datenpakete ermöglicht, wobei durch Setzen von Flags in dem Header der Datenpakete des Datenstroms bestimmt wird, dass es sich (zunächst) um nicht reservierungsbedürftige Daten handelt, d. h. Daten, die nicht in einer garantierten Übertragungszeit der Datenpakete übertragen werden müssen, und/oder Daten, die nicht erst nach dem Aussenden einer Reservierungsanfrage und Empfang einer zugehörigen Bestätigung auf die Reservierungsanfrage ausgesendet werden dürfen.

Datenpakete mit derartigen Flags im Header können dann in den Switches aber schon eine bevorzugte Behandlung erhalten, beispielsweise wie Daten, die nach einer entsprechenden Reservierung mit der Dienstgütegarantie ausgesendet werden. Dies kann zumindest solange erfolgen, solange in dem Kommunikationsnetzwerk hierfür noch Ressourcen zur Verfügung stehen. Außerdem vereinfacht die Verwendung eines Transportprotokolls, das neben der Übertragung von Daten mit garantierter Übertragungszeit der Datenpakete auch die Übertagung von Daten ohne garantierte Übertragungszeit der Datenpakete erlaubt, eine einfachere Umwandlung bzw. Umdeklarierung der Datenpakete des Datenstroms der ausgewählten Daten in einen Datenstrom mit garantierter Übertragungszeit der Datenpakete.

Erfindungsgemäß kann der Datenstrom der ausgewählten Daten im Rahmen des Ethernet-AVB-Standards, insbesondere unter Verwendung der Transportprotokolle nach IEEE 1722 oder IEEE 1733 oder entsprechenden Transportprotokollen, durch Definition einer speziellen VLAN-ID oder einer Multicast-Absenderadresse im Header der Datenpakete gekennzeichnet werden, die einerseits eine Aussendung der Daten ohne vorherigen Erhalt einer Bestätigung auf die Reservierungsanfrage erlaubt und andererseits in Switches als Indikator dafür verwendet werden kann, diese Daten mit hoher Priorität zu behandeln und weiterzuleiten, etwa entsprechend Datenpaketen, die mit einer garantierten Übertragungszeit übertragen werden. Hierdurch wird die reibungslose und schnelle Datenübertragung auch zu Beginn des Datenstroms der ausgewählten Datenpakete verbessert, solange die Dienstgüte für diesen Datenstrom noch nicht garantiert ist.

Eine weitere Beschleunigung der Datenübertragung von insbesondere echtzeitkritischen Daten lässt sich dadurch erreichen, dass das Kommunikationsnetzwerk beispielsweise bei der Produktion und/oder Inbetriebnahme, statisch vorkonfiguriert wird, ähnlich wie dies bei den FlexRay-Netzwerken der Fall ist. Auch hierdurch lässt sich die vorangehende Reservierungsanfrage für derartige Daten umgehen. Datenströme, die nach dem Systemstart schnell zur Verfügung stehen müssen, sind dem Systemhersteller eines vorzugsweise in sich geschlossenen oder nur definiert erweiterbaren Kommunikationsnetzwerks, beispielsweise einem Ethernet-Netzwerk in einem Kraftfahrzeug nach dem AVB-Standard, bekannt, so dass die elektronischen Steuereinheiten (ECU - Electronic Control Unit), vor allem die Switches zur Weiterleitung der Datenpakete entlang der Kommunikationsverbindung, geeignet vorkonfiguriert werden können und diesen speziellen Datenströmen von vornherein die entsprechende Dienstgüte gewähren.

Zusätzlich zu dieser Einstellung kann das erfindungsgemäße Kommunikationsnetzwerk so konfiguriert werden bzw. so betrieben werden, dass ein nicht vorkonfigurierter (eingeplanter) Datenverkehr beim Aufstart des Systems durch die elektronischen Steuergeräte (ECU) überhaupt nicht übertragen wird. Dies sichert die Ressourcen für eine besonders schnelle Übertragung der für den Aufstart des Systems notwendigen Datenpakete.

Dies kann in einem Ausführungsbeispiel also dadurch realisiert werden, dass insbesondere bei dem Aufstart des Kommunikationsnetzwerks beispielsweise in einer statischen Vorkonfiguration nicht eingeplanter Datenverkehr nicht übertragen wird, bis das Kommunikationsnetzwerk konfiguriert und für die allgemeine Kommunikation freigegeben wird.

Die Erfindung bezieht sich auch auf ein System gemäß dem Anspruch 8 und auf ein Computerprogrammprodukt gemäß dem Anspruch 9.

Weitere Merkmale, Vorteile und Anwendungsmöglichkeiten der vorliegenden Erfindung ergeben sich auch aus der nachfolgenden Beschreibung eines Ausführungsbeispiels und der Zeichnungen.

Es zeigen:
- Fig. 1: einen Kommunikationsablauf einer Kommunikation auf einem Kommunikationsnetzwerk mit garantierter Übertragungszeit der Datenpakete nach dem Ethernet-AVB-Standard von dem Stand der Technik; das erfindungsgemäß vorgeschlagene Kommunikationsnetzwerk ist in der Lage, auch dieses Standardverfahren durchzuführen;
- Fig. 2: einen entsprechenden Ablauf für das erfindungsgemäße Verfahren, in dem Daten des Datenstroms unmittelbar ohne das Abwarten einer entsprechenden Reservierungsbestätigung ausgesendet wird.

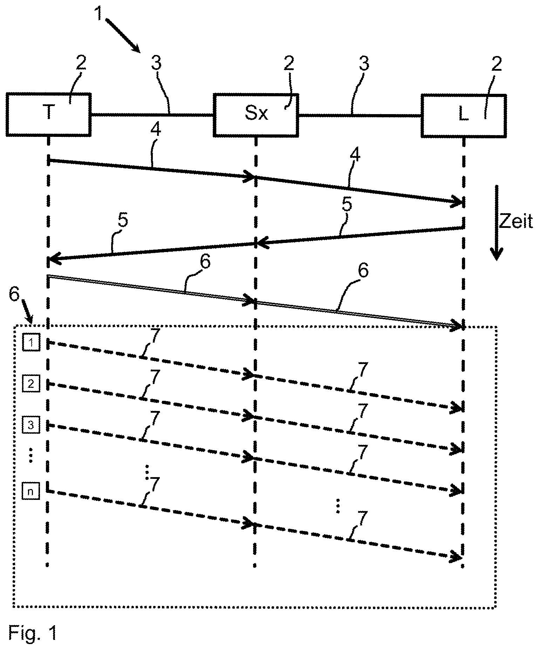

In Fig. 1 ist ein paketorientiertes Kommunikationsnetzwerk 1 schematisch dargestellt, das insbesondere nach dem Ethernet-AVB-Standard arbeiten kann. Verschiedene auch als Knoten bezeichnete Netzwerkteilnehmer 2 sind über geeignete Datenleitungen 3 derart miteinander verbunden, dass sie untereinander Daten austauschen können.

Eine Kommunikation läuft grundsätzlich so ab, dass ein mit T bezeichneter Knoten 2 (Teller) im Rahmen des Ethernet-AVB-Standards einen Datenstrom (Stream) an einen anderen, mit L gekennzeichneten Knoten 2 (Listener) aussenden will, wozu der Datenstrom durch die Datenleitung 3 über zwischen dem Sender T und dem Empfänger L angeordnete Switches Sx weitergeleitet wird, die auch einen Knoten 2 des Kommunikationsnetzwerks 1 bilden. Die Kommunikation kann über keinen, einen oder mehrere zwischengeschaltete Switches erfolgen.

Im Rahmen des Ethernet-AVB-Standards wird ein Verfahren zur Übertragung von Daten realisiert, in dem Datenpakete ohne garantierte Übertragungszeit der Datenpakete und mit einer garantierten Übertragungszeit der Datenpakete in dem Kommunikationsnetzwerk 1 übertragen werden können, abhängig davon, ob der normale Ethernet-Standard oder der Ethernet-AVB-Standard für die Datenübertragung genutzt wird.

In Fig. 1 ist durch die unter dem Knoten 2 dargestellten, gestrichelten Achsen in Richtung der Zeit der Verfahrensablauf für die Datenübertragung mit garantierter Übertragungszeit von dem Sender T der Daten zu dem Empfänger L der Daten entsprechend dem Ethernet-AVB-Standard nach dem Transportprotokoll IEEE 1722 oder IEEE 1733 schematisch vereinfacht dargestellt.

Wenn ein Netzwerkteilnehmer bzw. Knoten 2 als Sender T Daten, die eine bestimmte Güte erfordern, an einen anderen Netzwerkteilnehmer bzw. Knoten 2 als Empfänger L senden möchten, muss vorher durch das Austauschen von sogenannten MSRP-Nachrichten überprüft werden, ob in dem Kommunikationsnetzwerk 1 genügend Ressourcen, wie beispielsweise Datenrate zur Verfügung stehen, um die bestimmte Güte der Datenübertragung sicherstellen zu können. Dazu sendet der Sender T, wenn er einen Datenstrom mit garantierter Übertragungszeit der Datenpakete übertragen will, vor der eigentlichen Datenübertragung eine Reservierungsanfrage 4 aus, die durch den nächsten Teilnehmer, im dargestellten Beispiel den Switch Sx empfangen, wird.

Die Reservierungsanfrage 4 enthält als Parameter insbesondere die angeforderte Dienstgüte und die Datenrate des Datenstroms. Auf Grundlage dieser Information überprüft der Switch Sx, ob er in der Lage ist, einen derartigen Datenstrom in der geforderten Güte zu verarbeiten. Kann der Switch Sx die geforderten Ressourcen in dem Kommunikationsnetzwerk 1 zur Verfügung stellen, leitet er die Reservierungsanfrage 4 an den nächsten Teilnehmer im Kommunikationsnetzwerk 1 weiter, der ein anderer Switch Sx oder aber, wie hier die Kommunikationsverbindung verkürzend darstellend, der durch den Sender T angesprochene Empfänger L des Datenstroms sein kann.

Empfängt der potenzielle Empfänger L die Reservierungsanfrage 4 und möchte er auch den Datenstrom 6 empfangen, generiert er eine Bestätigung 5 der Reservierungsanfrage 4, die er über das Kommunikationsnetzwerk 1, mithin den Switch Sx, an den Sender T zurücksendet. Erst wenn der Sender T diese Bestätigung 5 erhalten hat, darf er entsprechend dem AVB-Standard 802.1Qat das Senden des Datenstroms 6 als AVB-Datenstrom mit garantierter Übertragungszeit der Datenpakete beginnen. Das Aussenden des Datenstroms 6 schließt sich zeitlich als an das Aussenden der Reservierungsanfrage 4 und das Empfangen der Bestätigung 5 der Reservierungsanfrage 4 an. Dies ist in Fig. 5 entsprechend der durch den Pfeil angedeuteten zeitlichen Richtung dargestellt.

Der durch einen Doppelstrich charakterisierte Datenstrom 6 wird in dem punktierten Feld 6 genauer dargestellt. Dieser Datenstrom ist aus einzelnen Datenpaketen 7 aufgebaut, die in einer bestimmten zeitlichen Folge, beispielsweise 125 µs, ausgesendet werden.

In dem den Datenstrom 6 repräsentierenden Kasten sind die Datenpakete des Senders T mit den Zahlen 1, 2, 3 bis n durchnummeriert. Der Übertragungsweg des Datenstroms 6 (d. h. die Kommunikationsverbindung des Datenstroms) erfolgt über genau den Switch Sx, der auch die Reservierungsanfrage 4 an den Empfänger L weitergeleitet und dabei die für die Übertragung gewünschte Güte zur Verfügung stehenden Ressourcen bestätigt hat.

Daher werden die Datenpakete 7 als Datenpakete mit einer garantierten Übertragungszeit (AVB-Datenpakete) gesendet und stehen nach der garantierten Übertragungszeit im Empfänger L zur Verfügung. Das erfindungsgemäß vorgeschlagene Kommunikationsnetzwerk ist durchaus in der Lage, auch dieses Standardverfahren durchzuführen.

Wie Fig. 1 zu entnehmen ist, vergeht allerdings eine nicht unbeträchtliche Zeit von typischerweise mehr als 100 ms bis hin zu einigen Sekunden, bis nach dem Starten einer Reservierungsanfrage 4 das Aussenden des eigentlichen Datenstroms 6 begonnen wird, da erst die Übertragung der Reservierungsanfrage 4 über einen oder mehrere Switches SX hin zu dem Empfänger L abgewartet werden muss, der dann seinerseits bei durch die Switches Sx positiv beschiedenen Ressourcen zusagt und in dem Kommunikationsnetzwerk 1 die entsprechende Bestätigung 5 der Reservierungsanfrage 4 über das Netzwerk an den Sender T zurücksendet, bevor dieser mit der eigentlichen Datenübertragung beginnt.

Dies ist bei echtzeitkritischen Daten und/oder auch beim Aufstart des Kommunikationsnetzwerks 1, bei dem diese echtzeitkritischen Daten als Konfigurationsdaten zum Aufbau des Netzwerks übertragen werden müssen, insofern nachteilig, als der Aufbau des Kommunikationsnetzes 1 bis zur Betriebsbereitschaft zur Datenübertragung eine Weile dauert, die beispielsweise bei Anwendung in einem Kraftfahrzeug in dieser Form nicht immer zur Verfügung steht.

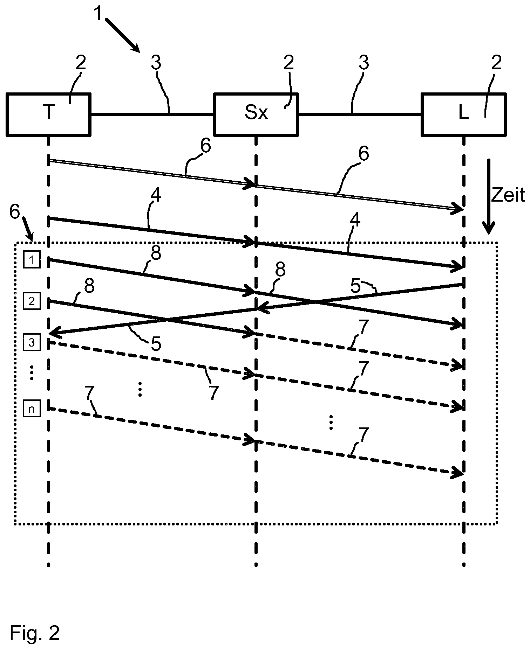

Daher schlägt die vorliegende Erfindung ergänzend ein Verfahren gemäss Anspruch 1. Ein Ausführungsbeispiel wird nachfolgend mit Bezug auf Fig. 2 näher erläutert.

Das zugrundeliegende, paketorientierte Kommunikationsnetzwerk 1 ist dasselbe Kommunikationsnetzwerk 1, das mit Bezug auf Fig. 1 bereits erläutert wurde, so dass hier auf erneute Beschreibung der Netzwerkteilnehmer 2 (Sender T, Switch SX, Empfänger L) verzichtet werden kann.

Abgesehen von dem vorbeschriebenen Verfahren zur Übertragung von Datenpaketen 7 mit einer garantierten Übertragungszeit kann in einem Ethernet-AVB-Netzwerk jederzeit sogenannter Hintergrunddatenverkehr gesendet werden, d. h., dass die übertragenen Datenpakete 8 ohne eine garantierte Übertragungszeit der Datenpakete 8 ausgesendet werden. Diese Möglichkeit macht sich die Erfindung zu Nutze und schlägt vor, für ausgewählte Daten, die besonders schnell übertragen werden müssen, den Datenstrom 6 als Datenpakte 8 ohne garantierte Übertragungszeit (Hintergrunddatenpakte) zu markieren, auch wenn aufgrund der besonders schnell angestrebten Datenübertragung an sich die Vereinbarung einer besonderen Güte erforderlich wäre.

Hierfür kann anstelle des IEEE 1722- oder IEEE 1733-Transportprotokolls beispielsweise ein anderes Transportprotokoll für die Daten bestimmt werden. Alternativ kann auch durch Setzen bestimmter Flags (Markierungen) im Rahmen des IEEE 1722/IEEE 1733-Transportprotokolls im Header des Datenpakets 8 bestimmt werden, dass es sich nicht um einen reservierungsbedürftigen AVB-Datenverkehr handelt, d. h. keine Übertragung mit einer garantierten Übertragungszeit der Datenpakete 7. Unter Beibehaltung des Ethernet-AVB-Standards kann dies durch Definition einer speziellen VLAN ID oder beispielsweise einer Multicast-Absenderadresse erfolgen.

Es wird den elektronischen Steuergeräten (ECU), die als Netzwerkteilnehmer oder Knoten 2 in das Kommunikationsnetzwerk 1 eingebunden sind, vorzugsweise durch eine statische Vorkonfiguration bekannt gegeben, dass für Datenpakte 8 mit dieser Flag in ihrem Header keine Reservierung notwendig ist, um den Datenverkehr weiterleiten bzw. zu senden oder zu empfangen. Hierzu werden vorher definierte Flags in einem Netzwerkteilnehmer 2, insbesondere einem Switch Sx, beispielsweise in einer Tabelle oder einem sonstigen geeigneten Speicherbereich abgelegt und eine Aktion definiert. Die Sender T können Datenströme mit derartig markierten Datenpaketen 8 also sofort übertragen bzw. aussenden, wobei diese Datenpakete durch die Switches Sx der Kommunikationsverbindung auch sofort hin zu dem Empfänger L weitergeleitet werden.

Da bei dieser Übertragung keine garantierte Übertragungszeit der Datenpakete 8 vereinbart ist, kann die Übertragung beispielsweise mit einer gewissen Verzögerung beginnen und der zeitliche Abstand der Datenpakte 8 ohne garantierte Übertragungszeit im Laufe der Übertragung auch variieren. Dies ist in Fig. 2 durch den vergleichsweise großen Abstand des ersten Datenpakets 8 unter dem Anstoßen des Datenstroms 6 dargestellt. Zu diesen Verzögerungen kann es auch kommen, wenn die Switches Sx die Flag in den Daten erkennen und die entsprechend gekennzeichneten Datenpakete bevorzugt weiterleiten.

Um diese Unsicherheit zu beseitigen und die Vorteile des Ethernet-AVB-Standards bzw. eines vergleichbaren Standards zu nutzen, bei dem die Datenpakete 7 mit einer garantierten Übertragungszeit übersendet werden, wird zeitlich nachfolgend auf das Anstoßen des Datenstroms 6 eine Reservierungsanfrage 4 durch den Sender nachgesendet, die entsprechend einer regulären Reservierungsanfrage 4 durch den Switch Sx empfangen, überprüft und im Falle eines möglichen Zur-Verfügung-Stellens der angeforderten Ressourcen an den Empfänger L weitergeleitet wird. Dieser prüft, ob er den Datenstrom empfangen will, und sendet nach einer positiv abgeschlossenen Prüfung die Bestätigung 5 der Reservierungsanfrage 4 zurück. Diese wird in dem Switch Sx empfangen, der aufgrund des unmittelbar angestoßenen Datenstroms 6 bereits Datenpakte 8 ohne garantierte Übertragungszeit vorliegen hat und an den Empfänger L weiterleitet, wobei eine Identifikation der Datenpakete 8 des Datenstrom 6 und der Bestätigung 5 der Reservierungsanfrage vorzugsweise über eine dem Datenstrom 6 zugeordnete Identifikation erkennbar ist.

Daher geht der Switch Sx dazu über, ein noch ohne garantierte Übertragungszeit empfangenes Datenpaket 8 in ein Datenpaket 7 mit garantierter Übertragungszeit um zu deklarieren, sobald die entsprechende Bestätigung 5 der Reservierungsanfrage 4 im Switch Sx vorliegt. In Fig. 2 ist dieser Vorgang für das von dem Sender T noch als Datenpaket ohne garantierte Übertragungszeit ausgesendete zweite Datenpaket der Fall.

Ferner leitet der Switch SX die Bestätigung 5 der Reservierungsanfrage 2 an den Empfänger T weiter, der diese vor Aussendung des dritten Datenpakets des Datenstroms 6 erhält. Daher wird dieses gleich als Datenpaket 7 mit garantierter Übertragungszeit ausgesendet. Ab diesem Zeitpunkt läuft die Übertragung wieder analog dem normalen Ethernet-AVB-Standard, wobei die Übertragung der Daten mit dem vorgeschlagenen Verfahren insgesamt schneller ist, da die in Fig. 1 dargestellte Wartezeit bis zum Beginn des Aussendens des Datenstroms 6 entfällt.

Hierdurch lassen sich zeitkritische Daten, insbesondere bei einem Neustart (Aufstart) des Kommunikationsnetzwerks 1, besonders schnell übertragen, wobei die Übertragung der Daten und das Reservieren der an sich angestrebten Dienstgüte zu Beginn des Übertragungsvorgangs erfindungsgemäß parallel verläuft.

Hierfür ist es besonders vorteilhaft, wenn das Kommunikationsnetzwerk 1 zumindest für in solchen Fällen häufig auftretende Kommunikationswege statisch vorkonfiguriert ist, weil dann eine bevorzugte Behandlung der Datenpakete 8 ohne garantierte Übertragungszeit auch einfach möglich ist, wenn die Dienstgüte noch nicht garantiert werden kann.

## Patentansprüche

1. Verfahren zur Übertragung eines Datenstroms (6) mit ersten Datenpaketen (8) und zweiten Datenpaketen (7) sowie einer Reservierungsanfrage (4) in einem paketorientierten Kommunikationsnetzwerk (1) entlang einer Kommunikationsverbindung von einem Sender (2, T) durch mindestens einen Switch (2, Sx) an einen Empfänger (2, L), wobei das Verfahren umfasst:
(a) die Übertragung der ersten Datenpakete (8) ohne eine garantierte Übertragungszeit der ersten Datenpakete (8), und
(b) die Übertragung der zweiten Datenpakete (7) mit einer garantierten maximalen Übertragungszeit der zweiten Datenpakete (7),
wobei das paketorientierte Kommunikationsnetzwerk (1) dazu angepasst ist,
(i) bei der Übertragung der zweiten Datenpakete (7) mit garantierter Übertragungszeit von dem Sender (2, T) an den Empfänger (2, L)
- für diese Datenübertragung mittels der durch den Sender (2, T) ausgesandten Reservierungsanfrage (4) eine gewisse Dienstgüte zu reservieren und
- die Datenübertragung der zweiten Datenpakete (7) mit garantierter Übertragungszeit erst nach Erhalt einer Bestätigung (5) der ausgesandten Reservierungsanfrage (4) durch den Sender (2, T) zu starten, und
(ii) ausgewählte Daten des Datenstroms (6) unmittelbar ohne vorheriges Aussenden der Reservierungsanfrage (4) und Abwarten deren Bestätigung (5) als erste Datenpakete (8) ohne garantierte Übertragungszeit durch den Sender (2, T) auszusenden, obwohl es sich bei den ausgewählten Daten um Daten handelt, die in einer garantierten Übertragungszeit übertragen werden sollen, und
die Reservierungsanfrage (4) erst nach dem Start des Aussendens der ersten Datenpakete (8) nachzusenden,
wobei nach Erhalt der Bestätigung (5) auf die nachgesendete Reservierungsanfrage (4) noch nicht gesendete Datenpakete des Datenstroms (6) durch den Sender (2, T) als Datenpakete (7) mit einer garantierten Übertragungszeit umdeklariert werden,
**dadurch gekennzeichnet,**
**dass** nach Erhalt der Bestätigung (5) auf die nachgesendete Reservierungsanfrage (4) erste Datenpakete (7) des Datenstroms (6), welche bereits ohne garantierte Übertragungszeit gesendet wurden und den Empfänger noch nicht erreicht haben, auf ihrem Weg entlang der Kommunikationsverbindung in dem mindestens einen Switch (2, Sx), der die Datenpakete (7, 8) empfängt und wieder aussendet, umdeklariert werden zu Datenpaketen (8) mit einer garantierten Übertragungszeit.

2. Verfahren nach Anspruch 1, wobei dass der Datenstrom (6) zunächst als Datenstrom (6) zur Übertragung von ersten Datenpaketen (8) ohne garantierte Übertragungszeit deklariert wird.

3. Verfahren nach einem der vorhergehenden Ansprüche, wobei für das Übertragen des Datenstroms (6) ein Transportprotokoll verwendet wird, welches die Übertragung der zweiten Datenpaketen (7) mit der garantierten Übertragungszeit ausführt, wobei durch Setzen von Flags in einem Header der ersten Datenpakte (8) des Datenstroms (6) bestimmt wird, dass es sich nicht um Daten handelt, die mit einer garantierten Übertragungszeit übertragen werden müssen.

4. Verfahren nach Anspruch 3, wobei der Datenstrom (6) der ausgewählten Daten durch Definition einer im Rahmen des Ethernet-AVB-Standards VLAN ID oder einer im Rahmen des Ethernet-AVB-Standards Multicast-Absenderadresse versehen wird.

5. Verfahren nach einem der Ansprüche 3 oder 4, wobei die Datenpakete (8) mit gesetzter Flag im Header durch den mindestens einen Switch (2, Sx) mit hoher Priorität behandelt werden.

6. Verfahren nach einem der vorhergehenden Ansprüche, wobei das Kommunikationsnetzwerk (1) statisch vorkonfiguriert wird.

7. Verfahren nach einem der vorhergehenden Ansprüche, wobei bei dem Aufstart des Kommunikationsnetzwerks (1) nicht eingeplanter Datenverkehr nicht übertragen wird, bis das Kommunikationsnetzwerk (1) konfiguriert ist.

8. System mit Teilnehmern für ein Kommunikationsnetzwerk (1), wobei die Teilnehmer ein Sender (2, T) und mindestens ein Switch (2, Sx) sind, wobei jeder Teilnehmer mit einer Sende-Empfangseinrichtung und einer Recheneinheit eingerichtet ist, um eine Kommunikation auf dem Kommunikationsnetzwerk (1) nach einem Kommunikationsprotokoll durchzuführen, und wobei der Sender (2, T) und der mindestens eine Switch (2, Sx) dazu eingerichtet sind, ein Verfahren nach einem der Ansprüche 1 bis 7 auszuführen.

9. Computerprogrammprodukt mit ersten Programmcodemitteln und zweiten Programmcodemitteln, die dazu geeignet sind, bei Ausführung der ersten Programmcodemittel auf einer ersten Recheneinheit eines Senders (2, T) für ein Kommunikationsnetzwerk (1) und bei Ausführung der zweiten Programmcodemittel auf jeweiligen Recheneinheiten des mindestens einen Switch (2, Sx) für ein Kommunikationsnetzwerk (1) das Verfahren nach einem der Ansprüche 1 bis 7 durchzuführen.

## Claims

1. Method for transmitting a data stream (6) containing first data packets (8) and second data packets (7) and a reservation request (4) in a packet-switched communication network (1) along a communication connection from a transmitter (2, T) to a receiver (2, L) through at least one switch (2, Sx), wherein the method comprises:
(a) transmitting the first data packets (8) without a guaranteed transmission time of the first data packets (8), and
(b) transmitting the second data packets (7) with a guaranteed maximum transmission time of the second data packets (7),
wherein the packet-switched communication network (1) is designed,
(i) when transmitting the second data packets (7) with a guaranteed transmission time from the transmitter (2, T) to the receiver (2, L),
- to reserve a certain quality of service for this data transmission by way of the reservation request (4) sent by the transmitter (2, T) and
- to start the data transmission of the second data packets (7) with a guaranteed transmission time only after receiving confirmation (5) of the sent reservation request (4) by the transmitter (2, T), and
(ii) to send selected data of the data stream (6) immediately without previous sending of the reservation request (4) and awaiting confirmation (5) thereof as first data packets (8) without a guaranteed transmission time by the receiver (2, T), even though the selected data are data that are supposed to be transmitted in a guaranteed transmission time, and
to forward the reservation request (4) only after the start of the sending of the first data packets (8),
wherein, following reception of confirmation (5) of the forwarded reservation request (4), data packets of the data stream (6) that have not yet been transmitted are redeclared by the transmitter (2, T) as data packets (7) with a guaranteed transmission time,
**characterized in that**,
following reception of confirmation (5) of the forwarded reservation request (4), first data packets (7) of the data stream (6), which have already been transmitted without a guaranteed transmission time and have not yet reached the receiver, are redeclared, on their journey along the communication connection in the at least one switch (2, Sx) that receives the data packets (7, 8) and sends them again, as data packets (8) with a guaranteed transmission time.

2. Method according to Claim 1, wherein the data stream (6) is initially declared as a data stream (6) for the transmission of first data packets (8) without a guaranteed transmission time.

3. Method according to either of the preceding claims, wherein, for the transmission of the data stream (6), a transport protocol that transmits the second data packets (7) with the guaranteed transmission time is used,
wherein it is determined, by setting flags in a header of the first data packets (8) of the data stream (6), that these are not data that have to be transmitted with a guaranteed transmission time.

4. Method according to Claim 3, wherein the data stream (6) of the selected data is provided by defining a special VLAN ID in the context of the Ethernet AVB standard or a multicast sender address in the context of the Ethernet AVB standard.

5. Method according to either of Claims 3 and 4, wherein the data packets (8) with a set flag in the header are treated with a high priority by the at least one switch (2, Sx).

6. Method according to one of the preceding claims, wherein the communication network (1) is statically preconfigured.

7. Method according to one of the preceding claims, wherein, when the communication network (1) is started up, unplanned data traffic is not transmitted until the communication network (1) is configured.

8. System containing subscribers to a communication network (1), wherein the subscribers are a transmitter (2, T) and at least one switch (2, Sx), wherein each subscriber is configured with a transceiver device and a computing unit in order to communicate on the communication network (1) in accordance with a communication protocol, and wherein the transmitter (2, T) and the at least one switch (2, Sx) are configured so as to execute a method according to one of Claims 1 to 7.

9. Computer program product containing first program code means and second program code means that are suitable for performing the method according to one of Claims 1 to 7 when the first program code means are executed on a first computing unit of a transmitter (2, T) for a communication network (1) and when the second program code means are executed on respective computing units of the at least one switch (2, Sx) for a communication network (1).

## Revendications

1. Procédé de transmission d'un flux de données (6) comprenant des premiers paquets de données (8) et des deuxièmes paquets de données (7) ainsi qu'une demande de réservation (4) dans un réseau de communication en mode paquets (1) le long d'une liaison de communication d'un émetteur (2, T) à un récepteur (2, L) à travers au moins un commutateur (2, Sx), le procédé comprenant :
(a) la transmission des premiers paquets de données (8) sans une durée de transmission garantie des premiers paquets de données (8), et
(b) la transmission des deuxièmes paquets de données (4) avec une durée de transmission maximale garantie des deuxièmes paquets de données (7),
le réseau de communication en mode paquets (1) étant adapté pour
(i) lors de la transmission des deuxièmes paquets de données (7) avec une durée de transmission garantie de l'émetteur (2, T) au récepteur (2, L),
- réserver une certaine qualité de service pour cette transmission de données au moyen de la demande de réservation (4) émise par l'émetteur (2, T) et
- démarrer la transmission de données des deuxièmes paquets de données (7) avec la durée de transmission garantie seulement après avoir obtenu une confirmation (5) de la demande de réservation (4) émise par l'émetteur (2, T) et
(ii) émettre par l'émetteur (2, T) des données sélectionnées du flux de données (6) directement sans émission préalable de la demande de réservation (4) et attente de sa confirmation (5) sous la forme de premiers paquets de données (8) sans une durée de transmission garantie, bien que les données sélectionnées soient des données qui doivent être transmises dans une durée de transmission garantie, et
envoyer postérieurement la demande de réservation (4) seulement après le début de l'émission des premiers paquets de données (8),
les paquets de données du flux de données (6) qui ne sont pas encore envoyés par l'émetteur (2, T) après la réception de la confirmation (5) de la demande de réservation (4) envoyée postérieurement étant redéclarés en tant que paquet de données (7) avec une durée de transmission garantie,
**caractérisé en ce**
**qu'**après la réception de la confirmation (5) de la demande de réservation (4) envoyée postérieurement, les premiers paquets de données (7) du flux de données (6) qui avaient déjà été envoyés sans durée de transmission garantie et n'ont pas encore atteint le récepteur, sur leur trajet le long de la liaison de communication, sont redéclarés en paquets de données (8) avec une durée de transmission garantie dans l'au moins un commutateur (2, Sx), lequel reçoit les paquets de données (7, 8) et les réémet.

2. Procédé selon la revendication 1, le flux de données (6) étant tout d'abord déclaré en tant que flux de données (6) destiné à la transmission de premiers paquets de données (8) sans durée de transmission garantie.

3. Procédé selon l'une des revendications précédentes, un protocole de transport étant utilisé pour la transmission du flux de données (6), lequel exécute la transmission du deuxième paquet de données (7) avec la durée de transmission garantie, la spécification de fanions dans un en-tête des premiers paquets de données (8) du flux de données (6) permettant de déterminer qu'il s'agit de données qui doivent être transmises avec une durée de transmission garantie.

4. Procédé selon la revendication 3, le flux de données (6) des données sélectionnées étant pourvu par définition d'un ID de VLAN spécial dans le cadre de la norme Ethernet AVB ou d'une adresse d'émetteur de multidiffusion dans le cadre de la norme Ethernet AVB.

5. Procédé selon l'une des revendications 3 ou 4, les paquets de données (8) dotés du fanion spécifié dans l'en-tête étant traités avec une priorité élevée par l'au moins un commutateur (2, Sx).

6. Procédé selon l'une des revendications précédentes, le réseau de communication (1) étant préconfiguré statiquement.

7. Procédé selon l'une des revendications précédentes, lors du démarrage du réseau de communication (1), un trafic de données non planifié n'étant pas transmis avant que le réseau de communication (1) soit configuré.

8. Système comprenant des abonnés pour un réseau de communication (1), les abonnées étant un émetteur (2, T) et au moins un commutateur (2, Sx), chaque abonné étant configuré avec un dispositif émetteur-récepteur et une unité de calcul afin d'exécuter sur le réseau de communication (1) une communication conformément à un protocole de communication, et l'émetteur (2, T) et l'au moins un commutateur (2, Sx) étant conçus pour mettre en œuvre un procédé selon l'une des revendications 1 à 7.

9. Produit de programme informatique comprenant des premiers moyens de code de programme et des deuxièmes moyens de code de programme qui sont adaptés pour, lors de l'exécution des premiers moyens de code de programme sur une première unité de calcul d'un émetteur (2, T) pour un réseau de communication (1) et lors de l'exécution des deuxièmes moyens de code de programme sur les unités de calcul respectives de l'au moins un commutateur (2, Sx) pour un réseau de communication (1), mettre en œuvre le procédé selon l'une des revendications 1 à 7.
